# EUROPEAN PATENT APPLICATION

(11) **EP 4 456 074 A1**
(43) Date of publication of application: **30.10.2024**
(21) Application number: 22910973.1
(22) Date of filing: 12.12.2022
(51) Int. Cl.: G12B 5/00

(54) **FEED MECHANISM AND METHOD FOR MANUFACTURING SAME**

(30) Priority: 23.12.2021 JP 2021209024
(71) Applicant: THK Co., Ltd., Tokyo 108-8506 (JP)
(72) Inventor: HOSHINO, Takanobu, Tokyo 108-8506 (JP); FUKUNAGA, Masato, Tokyo 108-8506 (JP); MITO, Koji, Tokyo 108-8506 (JP); SAWADA, Masaya, Tokyo 108-8506 (JP); AOYAMA, Yoichi, Tokyo 108-8506 (JP); SHIMOTSUCHI, Takayoshi, Tokyo 108-8506 (JP)
(74) Representative: Grünecker Patent- und Rechtsanwälte PartG mbB
(86) International application number: PCT/JP2022/045595
(87) International publication number: WO 2023/120265

(57) **Abstract**

Provided is a feed mechanism that has a small number of parts and that is suitable for downsizing. A feed mechanism (1) includes: a base (2); a movable body (3); a feed screw (4) configured to move the movable body (3) relative to the base (2); and a torque generation member (15) formed with a female thread (15b) that is threadedly engaged with the feed screw (4). The movable body (3) is formed with a housing hole (12) extending in a direction orthogonal to the feed screw (4), and the torque generation member (15) is housed in the housing hole (12).

## Description

### Technical Field

The present invention relates to a feed mechanism that moves a movable body with a feed screw.

### Background Art

A feed mechanism includes a base, a movable body, and a feed screw that moves the movable body relative to the base, and is configured in such a manner that the movable body moves by rotating the feed screw.

The feed mechanism may be desired to prevent the movable body from moving after the position of the movable body is adjusted. For example, if a laser displacement sensor, a CCD camera, an optical device, a sensor, and the like are mounted on the movable body, it is desired to prevent them from moving after their positions are adjusted with the feed screw.

As this type of feed mechanism, Patent Literature 1 discloses a feed mechanism in which two nuts, that is, a main nut and a secondary nut, are threadedly engaged with a feed screw, an elastic body such as a spring is placed between the main nut and the secondary nut, and the main nut and the secondary nut are biased in opposite directions by the elastic body.

The main nut and the secondary nut are biased in opposite directions by the elastic body. Therefore, when the feed screw is rotated, the main nut and the secondary nut generate torque that resists the rotation of the feed screw. Hence, when the feed screw is rotated manually, the feed screw can be prevented from rotating lightly, which allows fine adjustment of the amount of rotation of the feed screw. Moreover, the feed screw can be prevented from rotating after the position adjustment, which can prevent the movable body from moving.

### Citation List

### Patent Literature

Patent Literature 1: JP H10-047451 A

### Summary of Invention

### Technical Problem

However, the feed mechanism described in Patent Literature 1 has problems that the number of parts increases and that the feed mechanism is not suitable for downsizing.

The present invention has been made in view of the above problems, and an object of the present invention is to provide a feed mechanism that has a small number of parts and that is suitable for downsizing.

### Solution to Problem

In order to solve the above problems, one aspect of the present invention is a feed mechanism including: a base; a movable body; a feed screw configured to move the movable body relative to the base; and a torque generation member formed with a female thread that is threadedly engaged with the feed screw, in which one of the movable body and the base is formed with a housing hole extending in a direction orthogonal to the feed screw, and the torque generation member is housed in the housing hole.

### Advantageous Effects of Invention

According to the present invention, it is possible to prevent the torque generation member from being displaced in an axial direction of the feed screw relative to the one of the movable body and the base. Torque is generated on the feed screw by use of the torque generation member, so that it is possible to obtain a feed mechanism that has a small number of parts and that is suitable for downsizing.

### Brief Description of Drawings

Fig. 1 is a perspective view of a feed mechanism according to a first embodiment of the present invention.
Fig. 2 is a cross-sectional view taken along a feed screw of the feed mechanism according to the embodiment.
Fig. 3 is an exploded perspective view of the feed mechanism according to the embodiment.
Fig. 4 is a perspective view of a torque generation member according to the embodiment.
Fig. 5 is a cross-sectional view illustrating an intimate contact state between the torque generation member and the feed screw according to the embodiment.
Fig. 6 is a cross-sectional view taken along a feed screw of a feed mechanism according to a second embodiment of the present invention.
Fig. 7 is an exploded perspective view of the feed mechanism according to the second embodiment of the present invention.
Fig. 8 is a diagram illustrating a modification of the feed mechanism according to the second embodiment of the present invention.
Fig. 9 is a diagram illustrating a modification of the feed mechanism according to the second embodiment of the present invention.

### Description of Embodiments

Embodiments of a feed mechanism according to the present invention are described in detail hereinafter with reference to the accompanying drawings. However, the feed mechanism according to the present invention can be embodied in various forms and is not limited to the embodiments described in the present description. The embodiments are provided with the intention of enabling those skilled in the art to fully understand the invention by fully disclosing the description.

### (First Embodiment)

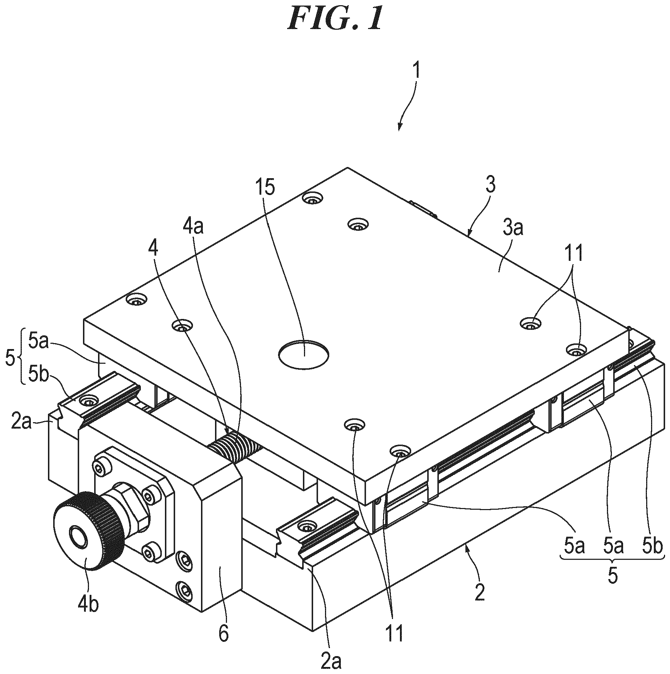

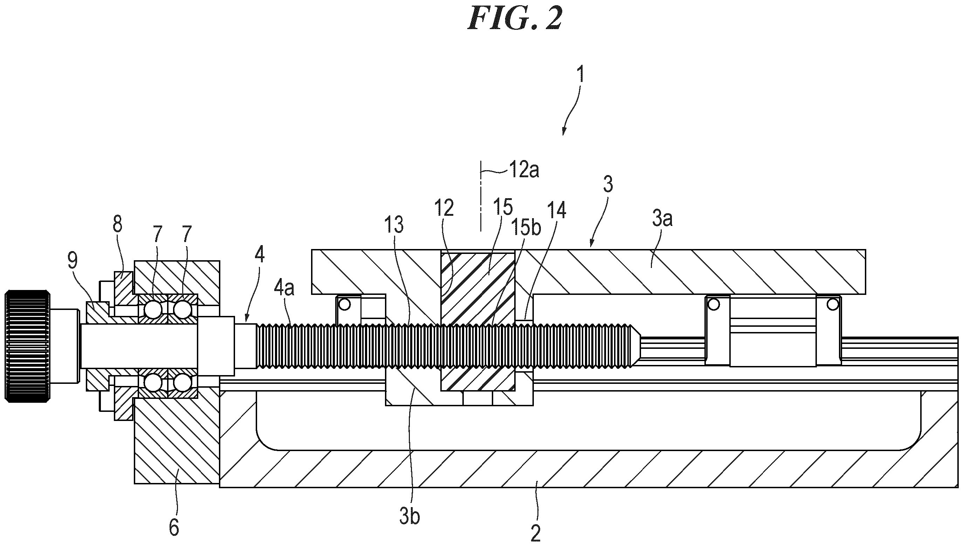

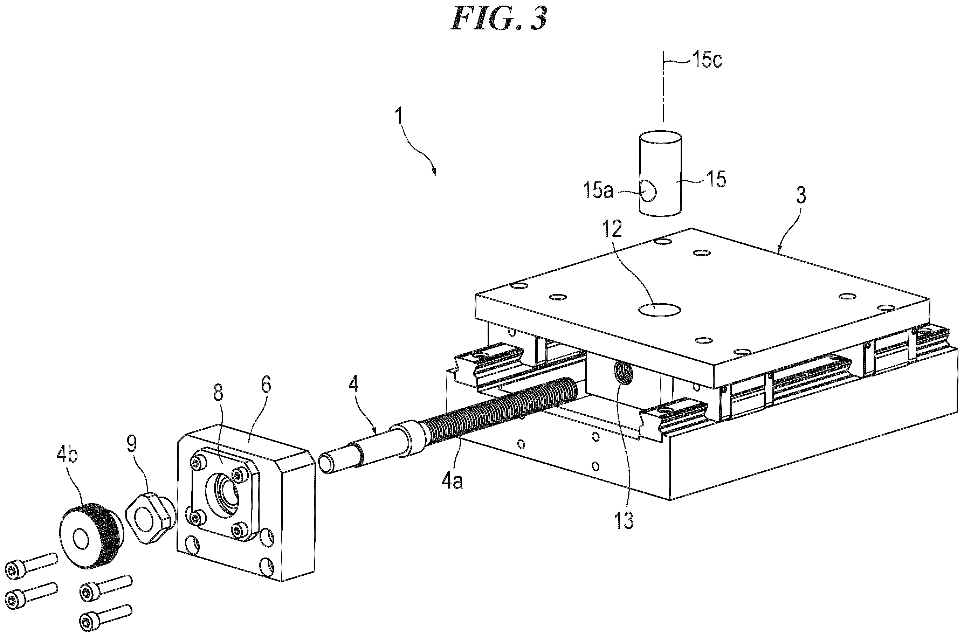

Fig. 1 illustrates a perspective view of a feed mechanism 1 according to a first embodiment of the present invention. Fig. 2 illustrates a cross-sectional view taken along a feed screw 4 of the feed mechanism 1. Fig. 3 illustrates an exploded perspective view of the feed mechanism 1.

As illustrated in Fig. 1, the feed mechanism 1 includes a base 2, a movable body 3, and the feed screw 4. The feed mechanism 1 is also called a table device, a stage device, or the like.

The base 2 has a flat plate shape. The planar shape of the base 2 is not particularly limited, and is, for example, a quadrangle. The base 2 is mounted on a fixed-side member such as a frame. The base 2 is formed with a mounting hole (not illustrated) for fastening the base 2 to the fixed-side member with a fastening member such as a bolt. The material of the base 2 is not particularly limited, and is, for example, metal such as aluminum, or resin.

A guide mechanism for guiding linear motion of the movable body 3 relative to the base 2 is mounted on a top surface of the base 2. The configuration of the guide mechanism is not particularly limited, and is, for example, a linear guide or a cross roller guide. A pair of the linear guides 5 is illustrated by example in Fig. 1. Each of the linear guides 5 includes a rail 5b that is fixed to the top surface of the base 2, and blocks 5a and 5a that are movable along the rail 5b. The movable body 3 is mounted on the blocks 5a. The rails 5b abut on protruding walls 2a at both left and right ends of the top surface of the base 2 to maintain parallelism. Many unillustrated rolling elements such as balls or rollers are interposed between the rail 5b and the block 5a in such a manner as to be able to perform rolling motion. Since the configuration of the linear guides 5 is well known, further detailed description is omitted.

The feed screw 4 is rotatably supported by the base 2. The feed screw 4 is formed with a male thread 4a. The type of the male thread 4a is not particularly limited, and may be a triangular screw thread or a trapezoidal screw thread. One end of the feed screw 4 is provided with a head 4b, so that the feed screw 4 can be rotated manually. Note that the feed screw 4 may be rotated by use of a hexagon wrench or a screwdriver, or the feed screw 4 may be rotated automatically by use of a motor. The material of the feed screw 4 is not particularly limited, and is, for example, metal such as steel.

As illustrated in Fig. 2, a bearing holder 6 is mounted on an end surface of the base 2. The bearing holder 6 houses a bearing 7 that rotatably supports the feed screw 4. A reference sign 8 denotes an outer ring retainer for fixing an outer ring of the bearing 7 to the bearing holder 6. A reference sign 9 denotes an inner ring retainer for fixing an inner ring of the bearing 7 to the feed screw 4. The inner ring retainer 9 is formed with a female thread that is threadedly engaged with an inner ring retainer-specific male thread (not illustrated) of the feed screw 4.

The movable body 3 includes, for example, a flat plate-shaped main body portion 3a, and a housing portion 3b protruding from the main body portion 3a toward the base 2. The main body portion 3a and the housing portion 3b are integrally formed. As illustrated in Fig. 1, the planar shape of the main body portion 3a is, for example, a quadrangle. The main body portion 3a is formed with mounting holes 11 for fixing the movable body 3 to the linear guides 5. Moreover, the main body portion 3a is formed with fixing screws (not illustrated) for fixing a laser displacement sensor, a CCD camera, an optical device, a sensor, and the like. The material of the movable body 3 is not particularly limited, and is, for example, metal such as aluminum, or resin.

As illustrated in Fig. 2, the housing portion 3b of the movable body 3 is formed with a housing hole 12 extending in a direction orthogonal to the feed screw 4. The housing hole 12 has a circular shape in cross section and penetrates the housing portion 3b of the movable body 3 in an up-and-down direction. A center line 12a of the housing hole 12 is orthogonal to the feed screw 4.

The movable body 3 is formed with a female thread 13 that is threadedly engaged with the feed screw 4. The female thread 13 is adjacent to the housing hole 12. The type of the female thread 13 is not particularly limited, and is a triangular screw thread, a trapezoidal screw thread, or the like, as with the feed screw 4. The female thread 13 of the movable body 3 is threadedly engaged with the feed screw 4. Therefore, the movable body 3 moves in an axial direction of the feed screw 4 by rotating the feed screw 4. The housing portion 3b of the movable body 3 is formed with a clearance hole 14 on a side opposite to the female thread 13 across the housing hole 12. The inner diameter of the clearance hole 14 is larger than the outer diameter of the feed screw 4.

As illustrated in Fig. 3, a torque generation member 15 is inserted into the housing hole 12 of the movable body 3. As illustrated in Fig. 1, the torque generation member 15 is exposed on a surface of the movable body 3. The torque generation member 15 has an approximately cylindrical shape, and a center line 15c of the torque generation member 15 is orthogonal to the feed screw 4. The material of the torque generation member 15 is resin, rubber, or the like, and the torque generation member 15 is an elastic body. The torque generation member 15 may be simply inserted into the housing hole 12 of the movable body 3, or may be fixed to the housing hole 12 with an adhesive.

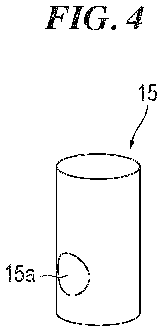

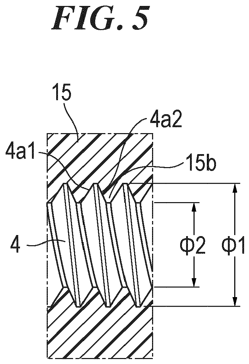

As illustrated in Fig. 4, before the torque generation member 15 is inserted into the housing hole 12 of the movable body 3, a through-hole 15a is formed in the torque generation member 15. The through-hole 15a is not formed with a female thread. The diameter of the through-hole 15a is smaller than an outer diameter Φ1 (refer to Fig. 5) of the crests of the feed screw 4, and is desirably smaller than a diameter Φ2 of the roots of the feed screw 4.

As illustrated in Fig. 2, after the torque generation member 15 is inserted into the housing hole 12 of the movable body 3, a female thread 15b is generated, for example, rolled, on an inner surface of the torque generation member 15 by use of the feed screw 4. The feed screw 4 is threadedly engaged with the female thread 13 of the movable body 3. The tip of the feed screw 4 reaches the through-hole 15a of the torque generation member 15 by rotating the feed screw 4. When the feed screw 4 is rotated further to screw the tip of the feed screw 4 into the through-hole 15a of the torque generation member 15, the torque generation member 15 is plastically deformed, and the female thread 15b is rolled on an inner surface of the through-hole 15a. Note that an incomplete crest may be formed in advance on the inner surface of the through-hole 15a to facilitate thread rolling. Moreover, instead of rolling the female thread 15b on the inner surface of the torque generation member 15 by use of the feed screw 4, the female thread 15b to have an interference fit (that is, a negative gap) with the feed screw 4 may be formed in advance on the inner surface of the through-hole 15a.

The entire circumference of the female thread 15b is formed in the torque generation member 15. As illustrated in Fig. 5, the female thread 15b of the torque generation member 15 is in intimate contact with flanks 4a1 and 4a2 on two sides of the crest of the feed screw 4 without any gap. When the feed screw 4 is rotated, the torque generation member 15 generates torque that resists the rotation of the feed screw 4. Hence, when the feed screw 4 is rotated manually, the torque generation member 15 can prevent the feed screw 4 from rotating lightly, which allows fine adjustment of the amount of rotation of the feed screw 4. Moreover, after the position of the movable body 3 is adjusted, it is possible to prevent the movable body 3 from moving.

The torque generation member 15 also has a role of absorbing backlash between the female thread 13 of the movable body 3 and the feed screw 4. In other words, it also has a role of removing the rattling of the movable body 3 caused by backlash. The position of the movable body 3 is determined by the torque generation member 15 that is in intimate contact with the feed screw 4 without any gap. When an axial force is applied to the movable body 3, the torque generation member 15 is elastically deformed by the backlash.

Up to this point, the configuration of the feed mechanism 1 according to the embodiment has been described above. According to the feed mechanism 1 of the embodiment, the following effects are exerted.

The movable body 3 is formed with the housing hole 12 extending in the direction orthogonal to the feed screw 4, and the torque generation member 15 is housed in the housing hole 12. Therefore, it is possible to prevent the torque generation member 15 from being displaced in the axial direction of the feed screw 4 relative to the movable body 3. The torque generation member 15 is used to generate torque on the feed screw 4, so that it is possible to obtain the feed mechanism 1 that has a small number of parts and is suitable for downsizing. Moreover, if the torque generation function is weakened due to the wearing out of the torque generation member 15 over time, the torque generation member 15 can be easily replaced. Therefore, predetermined performance can be maintained.

The movable body 3 is formed with the female thread 13 that is threadedly engaged with the feed screw 4. Therefore, the movable body 3 can be stably moved by use of the female thread 13 of the movable body 3. Moreover, the female thread 13 of the movable body 3 can also be used as a thrust source to generate the female thread 15b in the torque generation member 15 by use of the feed screw 4.

The female thread 15b is generated in the torque generation member 15 by use of the feed screw 4. Therefore, the torque generation member 15 can be brought into intimate contact with the feed screw 4. Moreover, the torque generation member 15 expands due to the threading. Therefore, the torque generation member 15 can be brought into intimate contact with an inner surface of the housing hole 12 of the movable body 3.

The torque generation member 15 has an approximately cylindrical shape. Therefore, the attitude of the torque generation member 15 can be changed following the feed screw 4, or the torque generation member 15 can be partially deformed following the feed screw 4. Hence, it is possible to suppress the fluctuations of torque acting on the feed screw 4.

The torque generation member 15 is exposed on the surface of the movable body 3. Therefore, the replacement of the torque generation member 15 is easy.

Note that the present invention is not limited to concretization of the above embodiment, and can be concretized in other embodiments without changing the gist of the present invention.

For example, in the above embodiment, the main body portion 3a and the housing portion 3b of the movable body 3 are integrally formed. However, they may be separate portions and fastened together with a fastening member such as a bolt.

### (Second Embodiment)

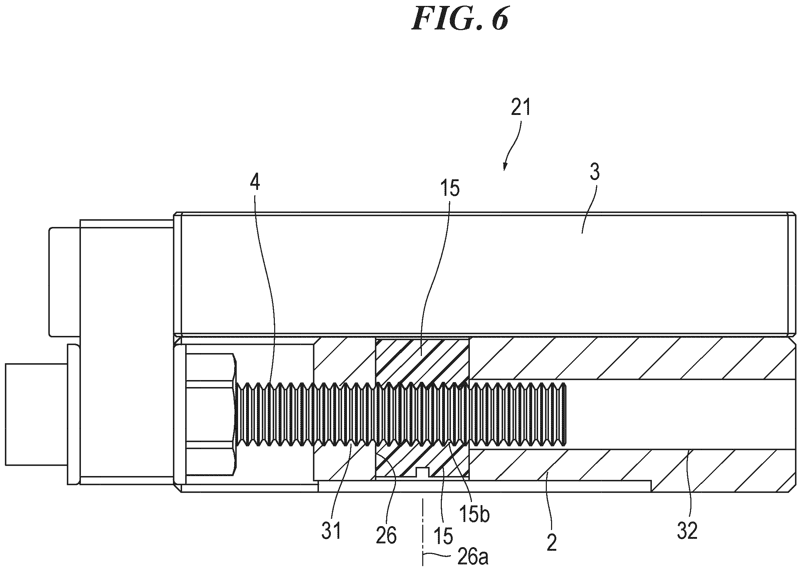

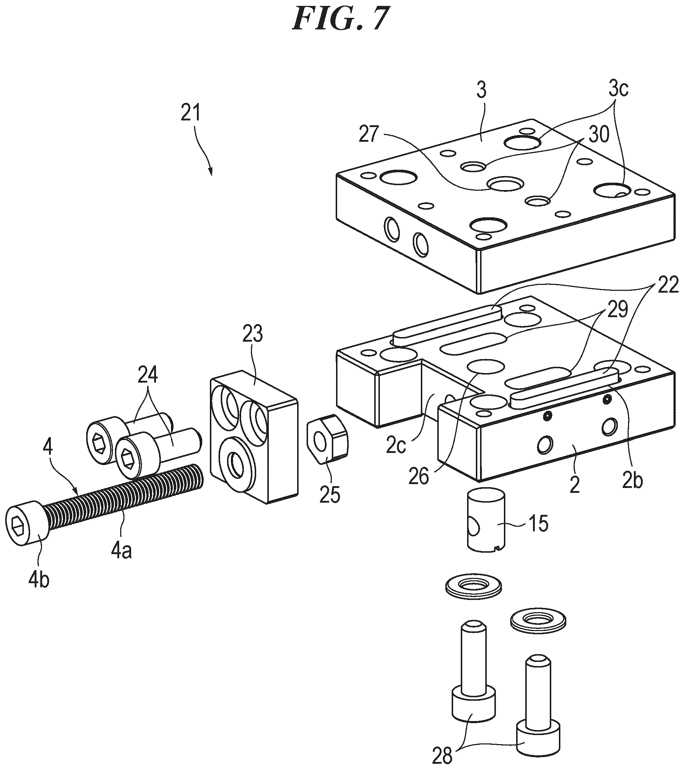

Fig. 6 illustrates a cross-sectional view of a feed mechanism 21 according to a second embodiment of the present invention. Fig. 7 illustrates an exploded perspective view of the feed mechanism 21 according to the second embodiment of the present invention.

As with the feed mechanism 1 according to the first embodiment, the feed mechanism 21 according to the second embodiment includes a base 2, a movable body 3, a feed screw 4, and a torque generation member 15.

In the feed mechanism 1 according to the first embodiment, the feed screw 4 is rotatably supported by the base 2, and the movable body 3 moves in the axial direction of the feed screw 4 relative to the base 2 by rotating the feed screw 4. On the other hand, in the feed mechanism 21 according to the second embodiment, the feed screw 4 is rotatably supported by the movable body 3, and the feed screw 4 and the movable body 3 move in the axial direction of the feed screw 4 relative to the base 2 by rotating the feed screw 4.

As illustrated in Fig. 7, the base 2 has a flat plate shape. The planar shape of the base 2 is not particularly limited, and is, for example, a quadrangle.

A pair of guide members 22 for guiding linear motion of the movable body 3 relative to the base 2 is mounted on a top surface of the base 2. The guide members 22 are fixed in long holes 2b in the top surface of the base 2. An undersurface of the movable body 3 is formed with guide grooves (not illustrated) where the guide members 22 enter. The movable body 3 slides along the guide members 22. One side of the base 2 is formed with a notch 2c. The notch 2c forms a space for moving a coupling portion 23.

The coupling portion 23 is fixed to the movable body 3. The coupling portion 23 is fastened to an end surface of the movable body 3 with a fastening member 24 such as a bolt. The feed screw 4 is rotatably supported by the coupling portion 23. The coupling portion 23 is sandwiched between a head 4b of the feed screw 4 and a nut 25. When the feed screw 4 moves in the axial direction, the movable body 3, together with the coupling portion 23, moves in the axial direction.

The feed screw 4 is formed with a male thread 4a. One end of the feed screw 4 is provided with a head 4b, so that the feed screw 4 can be rotated manually. Note that the feed screw 4 may be rotated by use of a hexagon wrench or a screwdriver, or the feed screw 4 may be rotated automatically by use of a motor.

As illustrated in Fig. 7, the movable body 3 has, for example, a flat plate shape. The movable body 3 is formed with fixing screws 3c for fixing a laser displacement sensor, a CCD camera, an optical device, a sensor, and the like to the movable body 3. Moreover, the movable body 3 is formed with an access hole 27 at a position corresponding to a housing hole 26 of the base 2 to allow access to the torque generation member 15 housed in the housing hole 26 of the base 2.

A reference sign 28 denotes a fastening member for preventing the movable body 3 from being detached from the base 2. The base 2 is formed with a long hole 29 where the fastening member 28 enters. The movable body 3 is formed with a screw hole 30 that is threadedly engaged with the fastening member 28. The fastening member 28 also has a role of bringing the movable body 3 and the base 2 into intimate contact with each other and generating a force that resists sliding of the movable body 3.

As illustrated in Fig. 6, the base 2 is formed with the housing hole 26 extending in a direction orthogonal to the feed screw 4. The housing hole 26 has a circular shape in cross section, and penetrates the base 2 in an up-and-down direction. A center line 26a of the housing hole 26 is orthogonal to the feed screw 4.

The base 2 is formed with a female thread 31 that is threadedly engaged with the feed screw 4. The female thread 31 is adjacent to the housing hole 26. The female thread 31 of the base 2 is threadedly engaged with the feed screw 4. Therefore, the movable body 3, together with the feed screw 4, moves in the axial direction of the feed screw 4 by rotating the feed screw 4. The base 2 is formed with a clearance hole 32 on a side opposite to the female thread 31 across the housing hole 26.

The torque generation member 15 is inserted into the housing hole 26 of the base 2. The torque generation member 15 has an approximately cylindrical shape, and a center line of the torque generation member 15 is orthogonal to the feed screw 4. The material of the torque generation member 15 is resin, rubber, or the like, and the torque generation member 15 is an elastic body.

A female thread 15b that is threadedly engaged with the feed screw 4 is generated in the torque generation member 15 by use of the feed screw 4. A method for generating the female thread 15b is the same as that of the feed mechanism 1 according to the first embodiment.

The female thread 15b of the torque generation member 15 is in intimate contact with the feed screw 4 without any gap. When the feed screw 4 is rotated, the torque generation member 15 generates torque that resists the rotation of the feed screw 4. Hence, when the feed screw 4 is rotated manually, the torque generation member 15 can prevent the feed screw 4 from rotating lightly, which allows fine adjustment of the amount of rotation of the feed screw 4. Moreover, after the position of the movable body 3 is adjusted, it is possible to prevent the movable body 3 from moving.

Up to this point, the configuration of the feed mechanism according to the second embodiment has been described. The feed mechanism according to the second embodiment exerts substantially similar effects to those of the feed mechanism according to the first embodiment.

### (Modification of Second Embodiment)

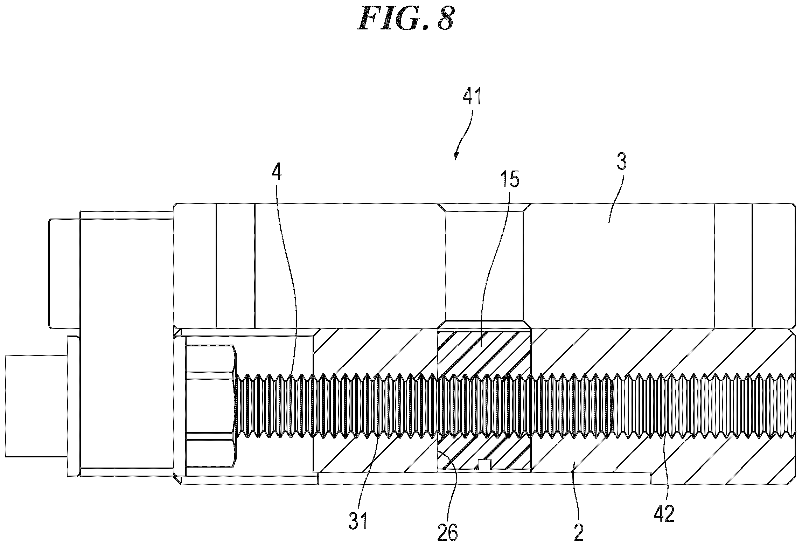

Fig. 8 illustrates a modification 41 of the feed mechanism 21 according to the second embodiment.

In the feed mechanism 21 according to the second embodiment, the base 2 is formed with the clearance hole 32 on the side opposite to the female thread 31 across the housing hole 26. In the modification 41, the base 2 is formed with a female thread 42 that is threadedly engaged with the feed screw 4, instead of the clearance hole, on the side opposite to the female thread 31 across the housing hole 26. The other configurations are the same as those of the feed mechanism 21 according to the second embodiment. Therefore, the same reference signs are assigned, and descriptions thereof are omitted.

### (Modification of Second Embodiment)

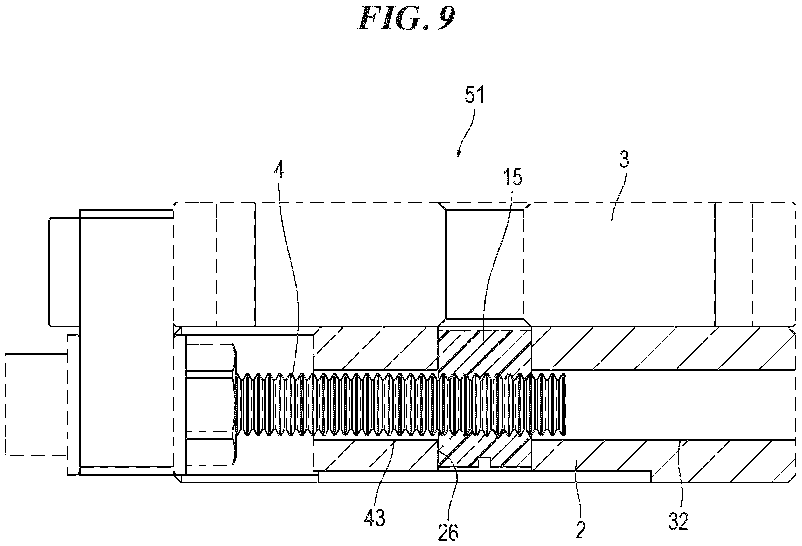

Fig. 9 illustrates a modification 51 of the feed mechanism 21 according to the second embodiment.

In the feed mechanism 21 according to the second embodiment, the base 2 is formed with the female thread 31 adjacent to the housing hole 26. In this modification 51, the base 2 is formed with a clearance hole 43 adjacent to the housing hole 26. The other configurations are the same as those of the feed mechanism 21 according to the second embodiment. Therefore, the same reference signs are assigned, and descriptions thereof are omitted.

The present description is based on Japanese Patent Application No. 2021-209024 filed on December 23, 2021. The entire contents thereof are included herein.

### Reference Signs List

- 1: Feed mechanism
- 2: Base
- 3: Movable body
- 4: Feed screw
- 12: Housing hole of movable body
- 13: Female thread of movable body
- 15: Torque generation member
- 15a: Through-hole of torque generation member
- 15b: Female thread of torque generation member
- 21: Feed mechanism
- 26: Housing hole of base
- 27: Access hole of movable body
- 31: Female thread of base
- 41: Feed mechanism
- 51: Feed mechanism

## Claims

1. A feed mechanism comprising:
a base;
a movable body;
a feed screw configured to move the movable body relative to the base; and
a torque generation member formed with a female thread that is threadedly engaged with the feed screw, wherein
one of the movable body and the base is formed with a housing hole extending in a direction orthogonal to the feed screw, and the torque generation member is housed in the housing hole.

2. The feed mechanism according to claim 1, wherein one of the movable body and the base is formed with a female thread that is threadedly engaged with the feed screw.

3. The feed mechanism according to claim 1 or 2, wherein the female thread is generated in the torque generation member by use of the feed screw.

4. The feed mechanism according to any one of claims 1 to 3, wherein the torque generation member has an approximately cylindrical shape.

5. The feed mechanism according to any one of claims 1 to 4, wherein
the movable body is formed with the housing hole in which the torque generation member is housed, and
the torque generation member is exposed on a surface of the movable body.

6. The feed mechanism according to any one of claims 1 to 4, wherein
the base is formed with the housing hole in which the torque generation member is housed, and
the movable body is formed with an access hole accessible to the torque generation member.

7. A method for manufacturing a feed mechanism including a base; a movable body; a feed screw configured to move the movable body relative to the base; and a torque generation member formed with a female thread that is threadedly engaged with the feed screw, the method comprising:
inserting the torque generation member into a housing hole in one of the movable body and the base, the housing hole extending in a direction orthogonal to the feed screw; and
generating the female thread on an inner surface of a through-hole of the torque generation member by use of the feed screw.
